# FASCICULE DE BREVET EUROPEEN

(11) **EP 3 565 281 B1**
(45) Date de publication et mention de la délivrance du brevet: **06.10.2021**
(21) Numéro de dépôt: 19180010.1
(22) Date de dépôt: 08.11.2016
(51) Int. Cl.: H04W 4/00, H04W 4/20, H04L 12/927, H04L 12/911, H04W 4/70

(54) **TRANSMISSION DE DONNÉES DE VOLUME VARIABLE DANS UN RÉSEAU MOBILE DE COMMUNICATION**
ÜBERTRAGUNG VON DATEN VON VERÄNDERLICHEM VOLUMEN IN EINEM MOBILEN KOMMUNIKATIONSNETZ
VARIABLE VOLUME DATA TRANSMISSION IN A MOBILE COMMUNICATION NETWORK

(30) Priorité: 10.11.2015 FR 1560766
(43) Date de publication de la demande: 06.11.2019
(62) Demande divisionnaire de: 18153956.0
(73) Titulaire: ORANGE, 92130 Issy-les-Moulineaux (FR)
(72) Inventeur: MOUQUET, Antoine, 92326 Châtillon Cedex (FR); EL MOUMOUHI, Sanaa, 92326 Châtillon Cedex (FR); MOUAFIK, Ali-Amine, 92326 Châtillon Cedex (FR)

(56) Documents cités:
- EP-A1- 2 509 345
- EP-A1- 2 884 780
- WO-A1-2013/012759
- WO-A1-2015/021276

## Description

La présente invention concerne le domaine de la transmission de données dans les réseaux mobiles de communication, et plus particulièrement la transmission de données pouvant présenter des volumes variables, notamment dans des réseaux de type cellulaire.

Les réseaux mobiles de communication actuels utilisent une architecture de type EPS (« Evolved Packet System »), telle que définie par l'organisme de normalisation 3GPP, qui repose notamment sur la distinction entre un canal de signalisation utilisé uniquement pour échanger des données de signalisation entre les divers équipements du réseau et un canal de transport de données utilisateur utilisé uniquement pour échanger des données utiles avec les terminaux mobiles connectés au réseau.

Ainsi, la transmission de données utiles vers un terminal mobile se fait habituellement dans un plan de transport, au moyen d'un canal de transport de données établi entre ce terminal mobile et l'entité réseau gérant l'accès aux réseaux externes au réseau mobile.

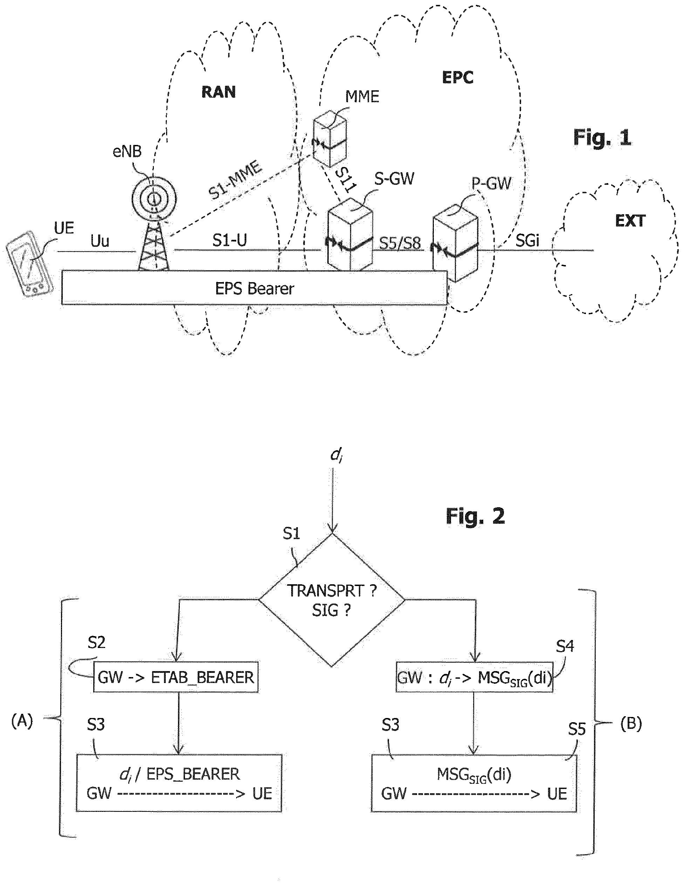

La figure 1 illustre un tel canal de transport de données, autrement appelé « Data radio Bearer » ou « EPS bearer » dans les normes 3GPP. Sur cette figure, ce canal de transport de données est porté par l'interface radio Uu reliant le terminal mobile UE et une station de base eNB dans la partie réseau d'accès RAN du réseau mobile, puis par l'interface S1-U reliant la station de base eNB à la partie cœur de réseau EPC du réseau mobile, jusqu'aux passerelles de service S-GW et de données P-GW, cette dernière servant alors à recevoir ou transmettre les données vers un autre réseau externe EXT, par exemple le réseau internet.

En ce qui concerne le canal de signalisation employée dans l'architecture EPS, il repose sur un canal logique porté par l'interface radio Uu, une interface dite « S1-MME » reliant la station de base et une entité de gestion de mobilité MME située dans la partie cœur de réseau EPC du réseau mobile.

Avec une telle architecture, pour chaque terminal, un canal de transport n'est établi que lorsque des données sont émises ou reçues par ce terminal, des échanges sur le canal de signalisation étant nécessaires pour établir ce canal de transport avant la transmission des données et le désactiver à l'issue de la transmission des données.

Le développement actuels des usages de type « internet des objets » (« internet of things » ou IoT en anglais) amène à envisager des applications mettant en œuvre des transmissions, par une multitude de terminaux simples tels que des capteurs, de très petits volumes de données, éventuellement contenues dans un seul paquet IP, contrairement aux transmissions classiques de données voix, image ou vidéo impliquant des smartphones.

L'architecture EPS évoquée ci-dessus n'est pas adaptée à ce type de transmission de petits volumes de données dans la mesure où, même pour transmettre un faible nombre de données contenues dans un unique paquet IP, il reste toujours nécessaire d'échanger des messages de signalisation entre le terminal et le réseau pour rétablir, puis désactiver, le canal de transport.

Afin d'améliorer l'efficacité du transport de petits volumes de données, notamment en termes de consommation énergétique du terminal, une solution spécifique à ce seul type d'usage, dénommée « Infrequent small data transmission using pre-establised NAS security », a été présentée dans le rapport technique 3GPP TR 23.720 v1.1.0 (clause 6.2).

Cette solution repose sur l'introduction d'une entité réseau spécifique à la transmission de données de type IoT (autrement dit de faibles volume), désignée par « C-SGN », laquelle permet à des terminaux spécifiquement dédiés à ce type d'usage d'échanger des données de faible volume avec un réseau mobile en les encapsulant dans des messages de signalisation échangés avec l'entité C-SGN, de façon à éviter de monter un canal de transport.

Une telle solution peut être avantageuse lorsqu'un très faible volume de données doit être transféré, typiquement lorsque les données tiennent dans un seul paquet IP. Par contre, s'il s'avère que le volume de données à transférer est plus important et devient volumineux, cette solution entraîne une multiplication des messages de signalisation échangés, ce qui peut entraîner une occupation de la voie radio plus importante (et par conséquent une consommation énergétique plus importante) que ce qui serait le cas si un canal de transport classique était utilisé pour transmettre les données.

La demande WO 2013/012759 décrit par ailleurs une architecture réseau dans laquelle un serveur SPDS (« Short Packet Data Service ») est introduit, ce serveur pouvant déterminer que des paquets descendants doivent être transmis par un canal de signalisation plutôt que par un canal de transport. Lorsque c'est le cas, ce serveur SPDS dialogue avec l'entité de gestion de mobilité MME du réseau mobile selon un protocole spécifique (dit SPDS-AP) afin de lui transmettre à cette entité les paquets de faible volume. L'entité MME, recevant de tels paquets, doit alors envoyer au terminal destinataire un message de « paging » spécialement modifié pour le prévenir de l'arrivée de ce type spécifique de paquet descendant.

Ce mécanisme nécessite donc des modifications protocolaires lourdes, que ce soit au niveau de l'entité MME, afin que cette entité puisse non seulement dialoguer avec le serveur SPDS selon le protocole SPDS-AP mais également modifier au cas par cas les messages de « paging » qu'elle envoie aux terminaux mobiles lors d'une connexion descendante, mais aussi au niveau des terminaux mobiles eux-mêmes, afin qu'ils puissent interpréter les messages de « paging » modifiés que l'entité MME leur envoie en présence de paquets descendants à transmettre sur un canal de signalisation.

En outre, ce mécanisme est déclenché par le serveur SDPS dès l'arrivée de données considérées comme étant de faible volume. Or, entre le moment où le serveur SDPS entame le dialogue avec l'entité MME selon le protocole SPDS-AP et le moment où le terminal UE retourne une requête de service étendue afin d'obtenir les données descendantes par un canal de signalisation, cette situation peut évoluer, avec par exemple un afflux de données descendantes supplémentaires rendant caduque la décision du serveur SDPS et plus pertinente la transmission de toutes ces données descendantes par un canal de transport de données. Quand bien même le serveur SDPS décide d'inverser sa décision de sélection, un certain nombre de données descendantes auront déjà été transmises via un canal de signalisation établi pour l'occasion, alors que ce n'est pas le mode de transmission le plus approprié.

La demande de brevet EP 2 509 345 A1, pour sa part, décrit un système de transmission dans lequel une entité de gestion de mobilité (MME en anglais), lorsqu'elle réceptionne un paquet de données descendantes jugées comme correspondant à des « petites données », envoie au terminal mobile destinataire un message de paging indiquant l'utilisation du seul canal de contrôle pour transmettre ces données descendantes, avant même que le terminal mobile ne réponde à ce message de paging au moyen de l'insertion d'un message de type « NAS ServiceRequest » dans un message de type « RRCConnectionSetupComplete ».

Dans un tel mécanisme, le MME se base uniquement sur une détermination de la nature des données descendantes pour décider du canal à utiliser pour la transmission de ces données descendantes. En particulier, le MME ne privilégie l'utilisation d'un canal de signalisation pour transmettre les données descendantes que s'il considère que ces données descendantes sont des « petites données ». Le MME peut ainsi choisir d'utiliser un mode de transmission s'avérant peu approprié au terminal destinataire des données descendantes, comme par exemple un canal de transport de données lourd à mettre en œuvre en termes de signalisation, pour transmettre des données vers un terminal disposant de peu de ressources tel qu'un objet connecté.

De plus, ce mécanisme requiert un changement protocolaire au niveau des premiers échanges avec le terminal mobile lorsqu'un paquet descendant est reçu par le réseau, que ce soit pour préparer ou interpréter le message de paging indiquant au terminal mobile qu'un canal de contrôle est à utiliser et le message de réponse de ce terminal mobile.

Il n'existe donc pas à l'heure actuelle d'équipement capable de traiter de manière flexible, efficacement et simplement, aussi bien la transmission de faibles volumes de données que la transmission de forts volumes de données au sein d'un réseau mobile.

La présente invention a pour objet d'améliorer cette situation.

Elle propose à cet effet un procédé de transmission de données entre un nœud réseau d'un réseau de communication mobile et un terminal suivant la revendication 1.

Ce procédé permet une sélection simplifiée du mode de transmission à utiliser pour des données descendantes, n'impliquant pas de changement protocolaire au niveau des premiers échanges avec le terminal mobile auquel sont destinés les paquets descendants. Cette sélection est par ailleurs plus fiable, car s'effectuant à un stade plus avancée du processus de connexion du terminal mobile au réseau, avec donc plus de recul sur le contexte de transmission des données. Le paramètre utilisé dans le procédé est destiné à être pris en compte pour déterminer si les données descendantes sont à transmettre vers le terminal mobile dans des messages de signalisation ou dans un canal un canal de transport de données établi avec le réseau mobile.

Selon un autre objet de la présente invention, il est proposé un nœud réseau, destiné à être utilisé dans un réseau mobile de télécommunications suivant la revendication 6.

Ce nœud réseau peut en particulier être une entité de gestion de mobilité (« Mobility Management Entity » en anglais).

Selon un autre objet de l'invention, il est proposé un système suivant la revendication 11.

Selon un autre objet de l'invention, il est proposé un terminal mobile suivant la revendication 13.

Lorsque le terminal mobile souhaite recevoir les données descendantes au moyen de messages de signalisation, le paramètre désigné dans la revendication peut prendre une valeur indiquant qu'il souhaite utiliser des messages de signalisation pour la transmission de données descendantes. Alternativement, lorsque le terminal mobile souhaite recevoir les données descendantes au moyen d'un canal de transport de données établi avec le réseau mobile, ce paramètre peut prendre une valeur indiquant qu'il souhaite utiliser un canal de transport de données pour la transmission de données descendantes.

Selon un autre objet de la présente invention, un programme d'ordinateur suivant la revendication 14 comporte des instructions de code pour la mise en œuvre du procédé ci-avant, lorsque ce programme est exécuté par un module de traitement d'un nœud réseau, ainsi qu'un support de programme d'ordinateur, lisible par un processeur.

Des modes de réalisation sont décrits dans les revendications dépendantes.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 est un schéma synoptique illustrant un canal de transport de données typique tel qu'utilisé dans un réseau de communication mobile ;
- la figure 2 illustre les étapes du procédé selon le principe général de la présente invention ; et
- les figures 3A et 3B illustrent les étapes du procédé selon deux modes de réalisation de l'invention, dans lequel un nœud réseau transmet des données dites descendantes vers un terminal mobile.

On se réfère tout d'abord à la **figure 2** sur laquelle sont illustrées les étapes du procédé selon le principe général de la présente invention.

Ce procédé est employé dans le cadre de l'échange de données entre d'une part un terminal mobile UE (par exemple un smartphone, une tablette, un téléphone portable, un PC portable, objet communiquant, etc.) et, d'autre part, un nœud réseau GW d'un réseau mobile de communication auquel se connecte ce terminal mobile. Ce nœud réseau GW est en particulier située dans la partie cœur du réseau mobile, de sorte que les échanges transitent par un réseau d'accès RAN comprenant une station de base (ou encore eNodeB) auxquelles le terminal mobile peut se connecter par voie radio. Ce nœud réseau GW peut en particulier être une passerelle donnant accès à un réseau externe, de sorte qu'il puisse recevoir des paquets de données destinés au terminal UE en provenance de ce réseau externe ainsi que recevoir des paquets de données provenant du terminal UE et destinés à être transmis vers ce réseau externe.

Dans ce procédé, suite à la fourniture au nœud réseau GW d'un ou plusieurs paquet(s) contenant des données dᵢ à transmettre vers le terminal mobile UE (i.e. des données « descendantes »), le nœud réseau GW détermine (étape S1), en fonction du volume des données à transmettre, un mode de transmission à utiliser parmi deux modes possibles :
- un premier mode de transmission A dans lequel le canal à utiliser pour transmettre les données est un canal de transport de données établi dans le réseau mobile, en d'autres termes que la transmission des données est préférablement réalisée dans le plan de transport ;
- un deuxième mode de transmission B dans lequel le canal à utiliser pour transmettre les données est un canal de signalisation du réseau mobile, en d'autres termes que la transmission des données est préférablement réalisée dans le plan de signalisation.

Une fois le mode de transmission déterminé pour le(s) paquet(s) de données à transmettre au terminal mobile UE, ce mode est utilisé pour transmettre ces données à cet équipement.

Ainsi, dans le cas où il est déterminé que le premier mode de transmission A est à utiliser (autrement dit qu'un canal de transport de données est à utiliser), en particulier lorsqu'un fort volume de données est à transmettre, le nœud réseau GW déclenche (étape S2) l'établissement d'un canal de transport de données entre le terminal mobile et le nœud réseau, au moyen de messages de signalisation dédiés à cet effet, par exemple tels que ceux décrits dans les documents TS 23.401 et TS 24.301.

Une fois le canal de transport de données établi, le nœud réseau GW transmet (étape S3) le(s) paquet(s) de données qui lui ont été fournis vers le terminal mobile UE, au sein de ce canal de transport, les données dᵢ étant alors transmises dans le plan de transport.

A contrario, dans le cas où il est déterminé que le deuxième mode de transmission B est à utiliser (autrement dit qu'un canal de signalisation est à utiliser), en particulier lorsqu'un faible volume de données est à transmettre, le nœud réseau GW insère (étape S4) les données qui lui ont été fournies dans un ou plusieurs message(s) de signalisation qui sont ensuite transmis (étape S5) au terminal mobile UE, dans le plan de signalisation donc et sans avoir à établir de canal de transport de données dans le plan de transport.

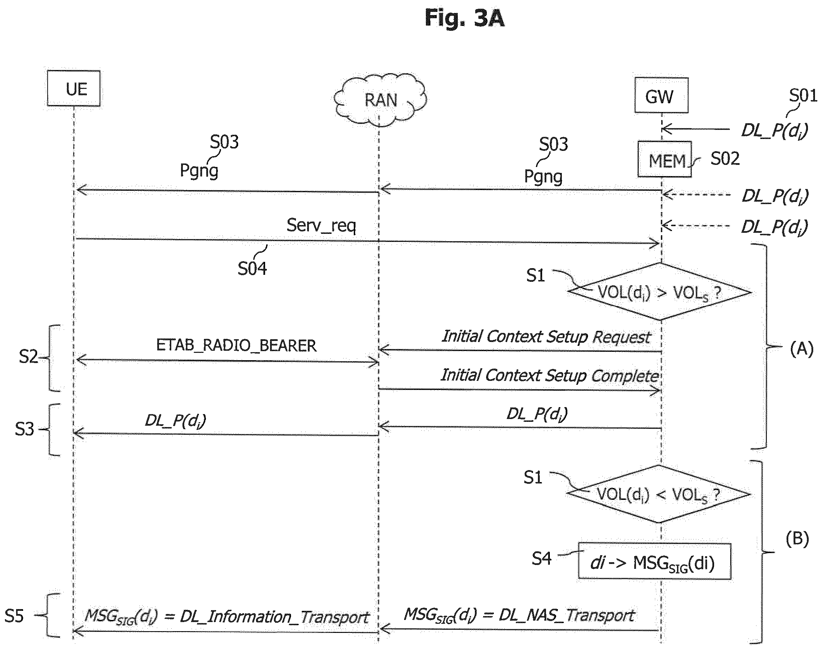

On se va se référer à présent aux figures 3A à 3B sur lesquelles sont illustrées les étapes de procédés selon deux modes de réalisation de l'invention dans lesquels le nœud réseau GW reçoit des paquets de données « descendantes » DL_P(dᵢ) à transmettre vers le terminal mobile UE. Dans ce mode de réalisation, le terminal UE est connecté au réseau de communication mobile par l'intermédiaire d'un réseau d'accès RAN comprenant une station de base, ou eNode B, à laquelle est connecté le terminal UE.

On se réfère dans un premier temps à la **figure 3A** illustrant un mode de réalisation spécifique d'un procédé de transmission de données descendantes selon l'invention, tenant compte dynamiquement du volume des données à transmettre.

Dans ce mode de réalisation, le procédé est déclenché ici par la réception par le nœud réseau GW (étape S01) d'un premier paquet de données DL_P(dᵢ) destiné au terminal UE et contenant des données utiles dᵢ destinées à ce même terminal, ce paquet pouvant provenir d'un réseau externe, par exemple internet.

Suite à la réception de ce premier paquet de données, le nœud réseau GW déclenche (étape S02) la mise en mémoire de ce premier paquet, ainsi que des éventuels autres paquets de données DL_P(d_{i,1}), DL_P(d_{i,2})... destinés au terminal UE qu'il peut recevoir par la suite. Cette mise en mémoire peut correspondre à une mise en mémoire tampon dans un module de mémorisation temporaire (ou buffer) du nœud réseau.

En outre, le nœud réseau GW émet (étape S03) vers le terminal UE un message d'avertissement Pgng, prenant typiquement la forme d'un message de « paging », ce message transitant par le réseau d'accès RAN auquel ce terminal UE est connecté par voie radio. En réponse à ce message, le terminal UE peut retourner (étape S04) une requête de service Serv_req, toujours via le réseau d'accès RAN auquel il est connecté par voie radio, afin notamment de signifier au nœud réseau GW qu'il accepte de recevoir les données qui lui sont destinées. Le terminal UE passe alors de l'état de veille à l'état connecté.

A ce stade, le nœud réseau GW procède à la détermination (étape S1) du canal à utiliser pour transmettre les paquets de données DL_P(dᵢ) qu'il a reçu pour le terminal UE, tel qu"introduite précédemment en figure 2.

Pour ce faire, le nœud réseau GW peut déterminer dans un premier temps le volume des données à transmettre au terminal UE et en déduire s'il s'agit d'un faible ou d'un fort volume, en le comparant avec un volume seuil de décision VOL_{S} :
- si ce volume est inférieur à ce volume seuil de décision VOL_{S}, il est considéré qu'un faible volume de données est à transmettre et donc qu'un canal de signalisation est le plus approprié pour transmettre ces données.
- si ce volume est supérieur à ce volume seuil de décision VOL_{S}, il est alors considéré qu'un fort volume de données est à transmettre et qu'un canal de transport de données est le plus approprié pour transmettre ces données.

Le volume des données à transmettre peut être déterminé par le nœud réseau GW de plusieurs manières.

En particulier, on peut prendre en compte tous les paquets destinés à UE reçus depuis le premier paquet déclenchant l'émission du message d'avertissement Pgng jusqu'au moment de la réception de la requête de service Serv_req. On calcule alors le volume de données VOL(dᵢ) à transmettre en additionnant les octets de toutes les données contenues dans ces paquets (éventuellement après avoir décapsulé et mémorisé ces données, pour ne tenir compte que de la partie utile des données reçues), voire en additionnant les octets de tous les paquets DL_P(dᵢ) reçus, pris dans leur intégralité, lorsqu'ils ont été mémorisés tels quels à leur réception. Ce volume s'exprimant alors en nombre d'octets, on compare ce volume avec un volume seuil de décision VOL_{S} exprimé également en nombre d'octets, par exemple 2000 octets.

Une alternative peut consister à déclencher une temporisation d'une durée prédéterminée suite à la réception du premier paquet de données destiné au terminal UE et à ne tenir compte que des paquets destinés à UE qui sont reçus et mémorisés durant cette durée prédéterminée. Le calcul du volume et la comparaison avec le volume seuil de décision VOL_{S} peuvent alors se faire de manière similaire à ce qui est décrit précédemment.

Deux cas de figure se présentent alors, selon le canal qui est déterminé comme étant à utiliser pour transmettre les paquets de données au terminal UE :
- Si l'utilisation d'un canal de transport de données est déterminée comme étant appropriée (un fort volume de données étant à transmettre), ce qui correspond au mode de transmission A, le nœud réseau GW déclenche (étape S2) l'établissement d'un canal de transport de données, par exemple au moyen d'une procédure classique tirée des normes 3GPP. Ici, le nœud réseau GW transmet une requête d'établissement de contexte initial au réseau d'accès RAN, lequel établit alors un canal radio (« data radio bearer ») avec le terminal UE avant de retourner au nœud réseau (en cas de succès de l'établissement du canal radio) un message d'achèvement d'établissement de contexte initial.

A l'issue de ces étapes, un canal de transport (i.e. un « S1 Bearer ») allant du terminal UE au nœud réseau GW est établi. Le nœud réseau GW peut alors transmettre (étape S3) tous les paquets de données DL_P(dᵢ) qu'il a mémorisés dans l'intervalle vers le terminal UE, au moyen de ce canal de transport.
- Par contre, lorsque l'utilisation d'un canal de signalisation est déterminée comme étant appropriée (un faible volume de données étant à transmettre), ce qui correspond au mode de transmission B, le nœud réseau GW ne déclenche pas d'établissement de canal de transport mais prépare un ou plusieurs message(s) de signalisation MSG(dᵢ) en y insérant (étape S4) les données dᵢ, extraites des paquets DL_P(dᵢ) reçus, à transmettre au terminal UE qu'il a pu mémoriser jusqu'à ce stade.

Le nœud réseau GW peut employer ici tout type de message de signalisation capable d'atteindre le terminal UE et de contenir des données de faible volume, par exemple des messages de type « NAS » comme discuté dans le document TR 23.720 v1.1.0, notamment un message de transport descendant NAS (« Downlink NAS Transport ») vers le réseau d'accès RAN.

Une fois ce (voire ces) message de signalisation préparé, il est transmis (étape S5) vers le terminal UE via le réseau d'accès RAN, lequel peut éventuellement modifier son format tout en conservant les données destinées à UE. Ainsi, ici, le message de transport descendant NAS est converti par le RAN en un message d'information de transfert descendant (« DL information transfer ») transmis par voie radio au terminal UE.

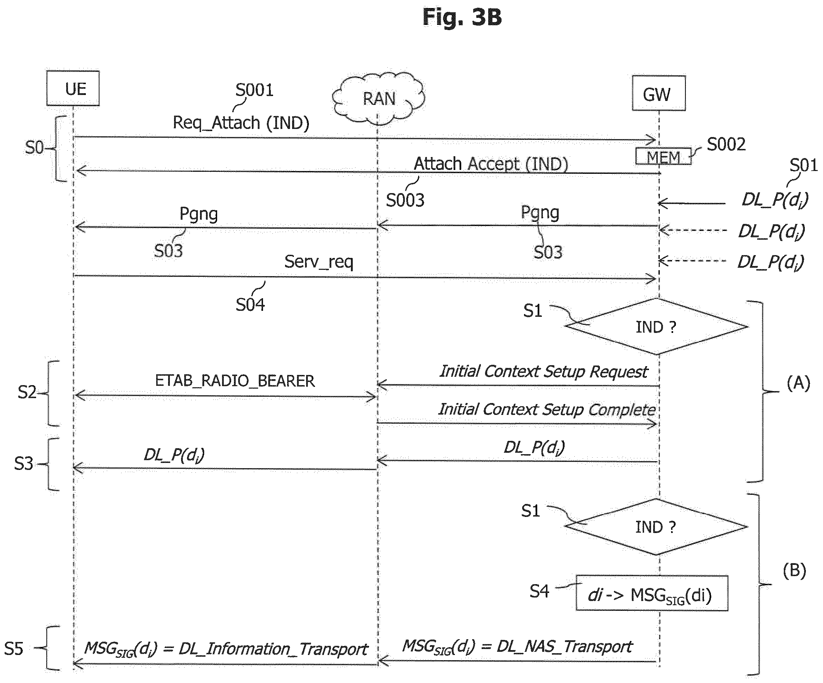

On se réfère à présent à la **figure 3B** illustrant un autre mode de réalisation, plus statique, d'un procédé de transmission de données descendantes selon l'invention.

Le procédé dans ce mode de réalisation se distingue du précédent en ce que la détermination du canal à utiliser ne se fait pas en fonction d'un volume de données, mais en fonction d'une indication transmise au préalable par le terminal UE.

Dans ce procédé, une phase S0 préalable d'attachement du terminal UE au réseau mobile a lieu, selon un processus traditionnel, afin de permettre la connexion du terminal au réseau.

Au cours de cette phase, le terminal UE émet (étape S001) une requête d'attachement, relayée par le RAN vers le nœud réseau GW. Cependant, dans le présent mode de réalisation, le terminal UE prépare cette requête en y insérant un paramètre IND prenant une première valeur indiquant qu'il souhaite utiliser un canal de signalisation ou une deuxième valeur indiquant qu'il souhaite utiliser un canal de transport de données, pour les données descendantes qui lui seraient destinées et qui seraient reçues par le nœud réseau GW.

Le nœud réseau GW mémorise (étape S002) ce paramètre en association avec un identifiant du terminal UE (par exemple son IMSI) et retourne (étape S003) un message d'acceptation de l'attachement, dans lequel il recopie le paramètre IND pour confirmer la prise en charge du canal choisi. Si l'utilisation de ce canal est refusée ou non supporté par le réseau, le nœud réseau GW ne recopie pas le paramètre IND dans le message d'acceptation de l'attachement.

Par la suite, lorsqu'il reçoit un paquet de données DL_P(dᵢ) destiné au terminal UE, le nœud réseau peut effectuer l'envoi d'un message d'avertissement et attendre en retour une requête de service, comme décrit précédemment (étapes S03 et S04).

Le nœud réseau GW vérifie alors s'il a mémorisé un paramètre IND en association avec l'identifiant du terminal destinataire UE des paquets. Si un identifiant IND dont la valeur indique un souhait de transmission par canal de signalisation a été mémorisé, le nœud réseau GW déclenche les étapes S4 et S5 décrites précédemment pour utiliser un canal de signalisation. Si par contre, un identifiant IND dont la valeur indique un souhait de transmission par canal de transport a été mémorisé, le nœud réseau GW déclenche les étapes S2 et S3 décrites précédemment pour utiliser un canal de transport de données.

Alternativement, on peut considérer qu'un canal de signalisation est à utiliser par défaut pour les données descendantes, en l'absence d'indicateur, un canal de transport n'étant à utiliser qu'en présence d'indicateur, ou vice versa.

Le paramètre indicatif du souhait d'un canal à utiliser, pour transmettre les données descendantes, peut s'imposer lors de la détermination du canal à utiliser pour tout type de données descendantes. Alternativement, ce paramètre peut être un souhait de canal à utiliser, sauf contrordre inséré avec les paquets descendants ou situation particulière. A titre d'exemple, un terminal UE adapté à de faibles volumes de données (par exemple capteur transmettant régulièrement des températures) peut indiquer au réseau son souhait d'utiliser un canal de signalisation, mais le nœud réseau GW peut éventuellement décider de passer outre ce souhait et de privilégier un canal de transport de données pour transmettre ponctuellement des données importantes de fort volume, comme une mise à jour du firmware du terminal par exemple.

Pour mettre en œuvre le procédé décrit précédemment, le nœud réseau GW peut se présenter sous la forme d'un dispositif comprenant un module de traitement (par exemple un processeur) associé à un module de mémoire morte, dans lequel peuvent être mémorisées les instructions de code d'un programme d'ordinateur que le module de traitement peut exécuter pour mettre en œuvre les étapes du procédé ci-avant, ainsi qu'un module de mémoire vive dans lequel peuvent être mémorisées les données descendantes, ou les paquets descendants, à traiter selon le procédé ci-avant. Le module de traitement peut être unique ou se décomposer en plusieurs modules (ou processeurs), éventuellement répartis dans plusieurs dispositifs et chargés d'exécuter une ou plusieurs des étapes du procédé ci-avant.

De son côté, le terminal mobile UE peut comprendre notamment deux modules distincts :
- D'une part, un (ou éventuellement plusieurs) module applicatif APP (un seul étant illustré ici) correspondant typiquement à une application logicielle installée ou embarquée dans le terminal UE, capable de traiter des données (éventuellement fournies via une interface utilisateur ou issues d'un capteur) et de fournir des données aux autres modules du terminal UE.
- D'autre part, un module de traitement COM comprenant notamment un module de communication radio (comprenant typiquement une chaîne radio, une antenne, un oscillateur, etc.) ayant pour fonction de communiquer avec le réseau mobile par voie radio. Ce module de traitement COM peut être implémenté sous la forme d'un processeur associé à une mémoire morte, ainsi qu'une mémoire vive, dans laquelle peut être mémorisée un programme d'ordinateur comprenant des instructions pour exécuter les différentes étapes du procédé ci-dessous, lorsqu'exécuté par le processeur.

Les modules applicatifs APP et de traitement COM peuvent être intégrés sur une même puce (chipset).

Ici, dans le mode de réalisation illustré en figure 3B, le module de traitement COM est configuré pour insérer le paramètre IND décrit précédemment dans les requêtes d'attachement transmises vers le réseau mobile pour permettre l'attachement du terminal UE à ce réseau.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, le procédé de transmission des données descendantes peut s'appliquer aussi bien aux données utiles di elles-mêmes qu'aux paquets (par exemple paquets IP) qui les contiennent. En particulier, le message de signalisation selon l'invention peut contenir aussi bien les données extraites des paquets fournis que les paquets dans leur ensemble, lorsque leur taille le permet. Inversement, dans le plan de transport, il est aussi bien possible de retransmettre les paquets fournis dans le canal de transport que de transmettre les données utiles, extraites de ces paquets, dans un tel canal de transport.

En outre, le nœud réseau GW a été décrit précédemment comme une seule entité réseau. Il est cependant tout à fait possible d'implémenter les fonctions précédemment décrites qu'il réalise en utilisant plusieurs entités distinctes. En particulier, une première entité réseau (par exemple une passerelle de type S-GW) pourrait être chargée de recevoir les paquets descendants, les mémoriser dans l'attente de la détermination, calculer le volume des données à transmettre et retransmettre ces paquets le cas échéant dans un canal de transport alors qu'une deuxième entité réseau (par exemple une entité de gestion de mobilité de type MME) serait chargée de comparer le volume de données à transmettre avec un volume seuil de transmission, instruire à la première entité réseau de transmettre les données dans un canal de transport de données si un tel canal est à utiliser, ou insérer et émettre les données dans un message de signalisation si un canal de signalisation est à utiliser. Toute autre répartition de ces fonctions entre ces deux, ou plus, d'entités réseaux est envisageable sans pour autant sortir du cadre de la présente invention.

## Revendications

1. Procédé de transmission de données entre un nœud réseau (GW) d'un réseau de communication mobile et un terminal mobile (UE), mis en œuvre par le nœud réseau suite à la réception par une entité réseau d'au moins un paquet contenant des données destinées au terminal mobile (DL_P(dᵢ)), le procédé comprenant l'émission (S03) d'un message d'avertissement (Pgng) vers le terminal mobile suite à la réception dudit au moins un paquet de données et la réception (S04) en réponse d'une requête de service (Serv_req) du terminal mobile,
le procédé étant **caractérisé en ce qu'**il comprend les étapes suivantes, suite à la réception de la requête de service du terminal mobile :
lorsqu'un paramètre indiquant un souhait d'utilisation de messages de signalisation a été reçu dans une requête provenant du terminal mobile, insérer (S4) les données destinées au terminal mobile dans au moins un message de signalisation (MSG(di)) et transmettre (S5) ledit au moins un message de signalisation vers le terminal mobile ; et
lorsqu'aucun paramètre indiquant un souhait d'utilisation de messages de signalisation n'a été reçu dans une requête provenant du terminal mobile ou lorsqu'un paramètre indiquant un souhait de transmission par canal de transport a été reçu dans une requête provenant du terminal mobile, transmettre (S3) ledit au moins un paquet de données contenant des données destinées au terminal mobile au moyen d'un canal de transport de données établi entre le terminal mobile et ladite entité réseau.

2. Procédé selon la revendication 1, comprenant en outre, en fonction du volume de données destinées au terminal mobile, la transmission (S3) d'au moins un paquet de données contenant des données destinées au terminal mobile au moyen d'un canal de transport de données établi entre le terminal mobile et le nœud réseau.

3. Procédé selon la revendication 2, comprenant en outre les étapes suivantes :
- déterminer le volume de données destinées au terminal ; et
- comparer ledit volume avec un volume seuil de décision, un canal de transport de données étant à utiliser lorsque ledit volume est supérieur audit volume seuil de décision et des messages de signalisation étant à utiliser lorsque ledit volume est inférieur audit volume seuil de décision.

4. Procédé selon l'une des revendications 1 à 3, comprenant en outre l'établissement (S2) dudit canal de transport de données avant son utilisation pour la transmission (S3) dudit au moins un paquet de données vers le terminal mobile.

5. Procédé selon l'une des revendications 1 à 4, dans lequel ledit nœud réseau et ladite entité réseau forment une seule et même entité.

6. Nœud réseau, destiné à être utilisé dans un réseau mobile de télécommunications, comprenant un module de traitement configuré pour émettre (S03) un message d'avertissement (Pgng) vers le terminal mobile suite à la réception d'au moins un paquet de données par une entité réseau et recevoir (S04) en réponse une requête de service (Serv_req) du terminal mobile,
le nœud réseau étant **caractérisé en ce que** le module de traitement est configuré pour, suite à la réception de la requête de service du terminal mobile, insérer (S4) les données destinées au terminal mobile dans au moins un message de signalisation (MSG(di)) et transmettre (S5) ledit au moins un message de signalisation vers le terminal mobile, lorsqu'un paramètre indiquant un souhait d'utilisation de messages de signalisation a été reçu dans une requête provenant du terminal mobile ;
le module de traitement étant configuré en outre pour déclencher la transmission (S3) dudit au moins un paquet de données au terminal mobile, au moyen d'un canal de transport de données établi entre le terminal mobile et l'entité réseau, lorsqu'aucun paramètre indiquant un souhait d'utilisation de messages de signalisation n'a été reçu dans une requête provenant du terminal mobile ou lorsqu'un paramètre indiquant un souhait de transmission par canal de transport a été reçu dans une requête provenant du terminal mobile.

7. Nœud réseau selon la revendication 6, **caractérisé en ce que** le module de traitement est configuré en outre pour déclencher la transmission (S3) dudit au moins un paquet de données destinées au terminal mobile, au moyen d'un canal de transport de données établi entre le terminal mobile et l'entité réseau, en fonction du volume de données destinées au terminal mobile.

8. Nœud réseau selon la revendication 6 ou 7, **caractérisé en ce que** le module de traitement est configuré en outre déclencher (S2) l'établissement du canal de transport de données avant son utilisation pour la transmission (S3) dudit au moins un paquet de données vers le terminal mobile.

9. Nœud réseau selon l'une des revendications 6 à 8, **caractérisé en ce que** ledit nœud réseau est une entité de gestion de mobilité (MME).

10. Nœud réseau selon l'une des revendications 6 à 9, **caractérisé en ce que** ledit nœud réseau et ladite entité réseau forment une seule et même entité.

11. Système comprenant une première entité réseau et une deuxième entité réseau, la première entité réseau étant un nœud réseau selon l'une des revendications 6 à 9, dans lequel la deuxième entité réseau comprend un module de traitement apte à recevoir au moins un paquet de données (DL_P(dᵢ)) contenant des données destinées à un terminal mobile (UE) et à transmettre ledit au moins un paquet de données (DL_P(dᵢ)) à la première entité réseau afin que ladite première entité réseau, soit déclenche la transmission dudit au moins un paquet de données (DL_P(dᵢ)) vers le terminal mobile (UE) au moyen d'un canal de transport de données, soit insère les données destinées au terminal mobile dans au moins un message de signalisation à transmettre au terminal mobile.

12. Système selon la revendication 11, dans lequel la deuxième entité réseau est une passerelle réseau de type S-GW.

13. Terminal mobile (UE) destiné à être utilisé avec un réseau mobile de télécommunications comprenant une entité réseau apte à recevoir des données descendantes destinées au terminal mobile, comprenant un module de traitement (COM) apte à échanger des données avec le réseau mobile,
le module de traitement étant configuré pour insérer, dans une requête destinée à un premier nœud réseau dudit réseau mobile de télécommunications, un paramètre (IND) indiquant un souhait d'utiliser des messages de signalisation pour la transmission des données descendantes, ledit paramètre étant destiné à être utilisé par un nœud réseau du réseau mobile de télécommunications pour déterminer si des données descendantes destinées au terminal mobile sont à transmettre audit terminal mobile dans au moins un message de signalisation ; et
le terminal mobile (UE) étant apte à émettre, après l'émission de la requête dans laquelle est insérée le paramètre (IND) vers ledit premier nœud réseau, une requête de service en réponse à un message d'avertissement (Pgng) émis par ledit premier nœud réseau suite à la réception de données destinées au terminal mobile par ladite entité réseau du réseau mobile de télécommunications.

14. Programme d'ordinateur comportant des instructions de code pour la mise en œuvre du procédé de transmission de données selon l'une des revendications 1 à 5, lorsque ce programme est exécuté par un module de traitement d'un nœud réseau (GW).

## Patentansprüche

1. Verfahren zur Datenübertragung zwischen einem Netzknoten (GW) eines mobilen Kommunikationsnetzes und einem mobilen Endgerät (UE), das vom Netzknoten nach dem Empfang durch eine Netzentität mindestens eines für das mobile Endgerät (DL_P(dᵢ)) bestimmte Daten enthaltenden Pakets durchgeführt wird, wobei das Verfahren das Senden (S03) einer Warnmeldung (Pgng) an das mobile Endgerät nach dem Empfang des mindestens einen Datenpakets und den Empfang (S04) einer Dienstanforderung (Serv_req) als Antwort vom mobilen Endgerät enthält,
wobei das Verfahren **dadurch gekennzeichnet ist, dass** es nach dem Empfang der Dienstanforderung vom mobilen Endgerät die folgenden Schritte enthält:
wenn ein einen Verwendungswunsch von Signalisierungsnachrichten anzeigender Parameter in einer vom mobilen Endgerät kommenden Anforderung empfangen wurde, Einfügen (S4) der für das mobile Endgerät bestimmten Daten in mindestens eine Signalisierungsnachricht (MSG(di)) und Übertragen (S5) der mindestens einen Signalisierungsnachricht an das mobile Endgerät; und
wenn kein einen Verwendungswunsch von Signalisierungsnachrichten anzeigender Parameter in einer vom mobilen Endgerät kommenden Anforderung empfangen wurde, oder wenn ein einen Übertragungswunsch über Transportkanal anzeigender Parameter in einer vom mobilen Endgerät kommenden Anforderung empfangen wurde, Übertragen (S3) des mindestens einen für das mobile Endgerät bestimmte Daten enthaltenden Datenpakets mittels eines Datentransportkanals, der zwischen dem mobilen Endgerät und der Netzentität eingerichtet ist.

2. Verfahren nach Anspruch 1, das außerdem abhängig vom Volumen von für das mobile Endgerät bestimmten Daten die Übertragung (S3) mindestens eines für das mobile Endgerät bestimmte Daten enthaltenden Datenpakets mittels eines Datentransportkanals enthält, der zwischen dem mobilen Endgerät und dem Netzknoten eingerichtet ist.

3. Verfahren nach Anspruch 2, das außerdem die folgenden Schritte enthält:
- Bestimmen des Volumens von für das Endgerät bestimmten Daten; und
- Vergleichen des Volumens mit einem Entscheidungsschwellenvolumen, wobei ein Datentransportkanal zu verwenden ist, wenn das Volumen größer ist als das Entscheidungsschwellenvolumen, und Signalisierungsnachrichten zu verwenden sind, wenn das Volumen kleiner ist als das Entscheidungsschwellenvolumen.

4. Verfahren nach einem der Ansprüche 1 bis 3, das außerdem die Einrichtung (S2) des Datentransportkanals vor seiner Verwendung zur Übertragung (S3) des mindestens einen Datenpakets an das mobile Endgerät enthält.

5. Verfahren nach einem der Ansprüche 1 bis 4, wobei der Netzknoten und die Netzentität eine einzige Entität bilden.

6. Netzknoten, der dazu bestimmt ist, in einem mobilen Telekommunikationsnetz verwendet zu werden, der ein Verarbeitungsmodul enthält, das konfiguriert ist, nach dem Empfang mindestens eines Datenpakets durch eine Netzentität eine Warnmeldung (Pgng) an das mobile Endgerät zu senden (S03) und als Antwort eine Dienstanforderung (Serv_req) vom mobilen Endgerät zu empfangen (S04),
wobei der Netzknoten **dadurch gekennzeichnet ist, dass** das Verarbeitungsmodul konfiguriert ist, nach dem Empfang der Dienstanforderung vom mobilen Endgerät die für das mobile Endgerät bestimmten Daten in mindestens eine Signalisierungsnachricht (MSG(di)) einzufügen (S4) und die mindestens eine Signalisierungsnachricht an das mobile Endgerät zu übertragen (S5), wenn ein einen Verwendungswunsch von Signalisierungsnachrichten anzeigender Parameter in einer vom mobilen Endgerät kommenden Anforderung empfangen wurde;
wobei das Verarbeitungsmodul außerdem konfiguriert ist, die Übertragung (S3) des mindestens einen Pakets von für das mobile Endgerät bestimmten Daten mittels eines zwischen dem mobilen Endgerät und der Netzentität eingerichteten Datentransportkanals auszulösen, wenn kein einen Verwendungswunsch von Signalisierungsnachrichten anzeigender Parameter in einer vom mobilen Endgerät kommenden Anforderung empfangen wurde, oder wenn ein einen Übertragungswunsch durch Transportkanal anzeigender Parameter in einer vom mobilen Endgerät kommenden Anforderung empfangen wurde.

7. Netzknoten nach Anspruch 6, **dadurch gekennzeichnet, dass** das Verarbeitungsmodul außerdem konfiguriert ist, die Übertragung (S3) des mindestens einen Pakets von für das mobile Endgerät bestimmten Daten mittels eines zwischen dem mobilen Endgerät und der Netzentität eingerichteten Datentransportkanals abhängig vom Volumen von für das mobile Endgerät bestimmten Daten auszulösen.

8. Netzknoten nach Anspruch 6 oder 7, **dadurch gekennzeichnet, dass** das Verarbeitungsmodul außerdem konfiguriert ist, die Einrichtung des Datentransportkanals vor seiner Verwendung zur Übertragung (S3) des mindestens einen Datenpakets an das mobile Endgerät auszulösen (S2).

9. Netzknoten nach einem der Ansprüche 6 bis 8, **dadurch gekennzeichnet, dass** der Netzknoten eine Mobilitätsverwaltungsentität (MME) ist.

10. Netzknoten nach einem der Ansprüche 6 bis 9, **dadurch gekennzeichnet, dass** der Netzknoten und die Netzentität eine einzige Entität bilden.

11. System, das eine erste Netzentität und eine zweite Netzentität enthält, wobei die erste Netzentität ein Netzknoten nach einem der Ansprüche 6 bis 9 ist, wobei die zweite Netzentität ein Verarbeitungsmodul enthält, das fähig ist, mindestens ein für ein mobiles Endgerät (UE) bestimmte Daten enthaltendes Datenpaket (DL_P(dᵢ)) zu empfangen und das mindestens eine Datenpaket (DL_P(dᵢ)) an die erste Netzentität zu übertragen, damit die erste Netzentität entweder die Übertragung des mindestens einen Datenpakets (DL_P(dᵢ)) an das mobile Endgerät (UE) mittels eines Datentransportkanals auslöst oder die für das mobile Endgerät bestimmten Daten in mindestens eine an das mobile Endgerät zu übertragende Signalisierungsnachricht einfügt.

12. System nach Anspruch 11, wobei die zweite Netzentität ein Netz-Gateway des Typs S-GW ist.

13. Mobiles Endgerät (UE), das dazu bestimmt ist, mit einem mobilen Telekommunikationsnetz verwendet zu werden, das eine Netzentität enthält, die fähig ist, für das mobile Endgerät bestimmte Abwärtsdaten zu empfangen, das ein Verarbeitungsmodul (COM) enthält, das fähig ist, Daten mit dem mobilen Netz auszutauschen,
wobei das Verarbeitungsmodul konfiguriert ist, in eine für einen ersten Netzknoten des mobilen Telekommunikationsnetzes bestimmte Anforderung einen Parameter (IND) einzufügen, der einen Wunsch anzeigt, Signalisierungsnachrichten zur Übertragung der Abwärtsdaten zu verwenden, wobei der Parameter dazu bestimmt ist, von einem Netzknoten des mobilen Telekommunikationsnetzes verwendet zu werden, um zu bestimmen, ob für das mobile Endgerät bestimmte Abwärtsdaten an das mobile Endgerät in mindestens einer Signalisierungsnachricht zu übertragen sind; und
wobei das mobile Endgerät (UE) fähig ist, nach dem Senden der Anforderung, in die der Parameter (IND) eingefügt ist, an den ersten Netzknoten eine Dienstanforderung als Antwort auf eine Warnmeldung (Pgng) zu senden, die vom ersten Netzknoten nach dem Empfang von für das mobile Endgerät bestimmten Daten durch die Netzentität des mobilen Telekommunikationsnetzes gesendet wurde.

14. Computerprogramm, das Codeanweisungen zur Durchführung des Datenübertragungsverfahrens nach einem der Ansprüche 1 bis 5 aufweist, wenn dieses Programm von einem Verarbeitungsmodul eines Netzknotens (GW) ausgeführt wird.

## Claims

1. Method for transmitting data between a network node (GW) of a mobile communication network and a mobile terminal (UE), implemented by the network node following the reception, by a network entity, of at least one packet containing data (DL_P(dᵢ)) intended for the mobile terminal, the method comprising the transmission (S03) of an alert message (Pgng) to the mobile terminal following the reception of said at least one data packet and the reception (S04), in response, of a service request (Serv_req) from the mobile terminal,
the method being **characterized in that** it comprises the following steps, following the reception of the service request from the mobile terminal:
when a parameter indicating a desire to use signalling messages has been received in a request coming from the mobile terminal, inserting (S4) the data intended for the mobile terminal into at least one signalling message (MSG(di)) and transmitting (S5) said at least one signalling message to the mobile terminal; and
when no parameter indicating a desire to use signalling messages has been received in a request coming from the mobile terminal or when a parameter indicating a desire for transmission using a transport channel has been received in a request coming from the mobile terminal, transmitting (S3) said at least one data packet containing data intended for the mobile terminal by way of a data transport channel established between the mobile terminal and said network entity.

2. Method according to Claim 1, furthermore comprising, depending on the volume of data intended for the mobile terminal, transmitting (S3) at least one data packet containing data intended for the mobile terminal by way of a data transport channel established between the mobile terminal and the network node.

3. Method according to Claim 2, furthermore comprising the following steps:
- determining the volume of data intended for the terminal; and
- comparing said volume with a decision threshold volume, a data transport channel being used when said volume is greater than said decision threshold volume and signalling messages being used when said volume is less than said decision threshold volume.

4. Method according to one of Claims 1 to 3, furthermore comprising establishing (S2) said data transport channel before using it to transmit (S3) said at least one data packet to the mobile terminal.

5. Method according to one of Claims 1 to 4, wherein said network node and said network entity form one and the same entity.

6. Network node, intended to be used in a mobile telecommunications network, comprising a processing module configured so as to transmit (S03) an alert message (Pgng) to the mobile terminal following the reception of at least one data packet by a network entity and receive (S04), in response, a service request (Serv_req) from the mobile terminal,
the network node being **characterized in that** the processing module is configured so as, following the reception of the service request from the mobile terminal, to insert (S4) the data intended for the mobile terminal into at least one signalling message (MSG(di)) and transmit (S5) said at least one signalling message to the mobile terminal, when a parameter indicating a desire to use signalling messages has been received in a request coming from the mobile terminal;
the processing module furthermore being configured so as to trigger the transmission (S3) of said at least one data packet to the mobile terminal, by way of a data transport channel established between the mobile terminal and the network entity, when no parameter indicating a desire to use signalling messages has been received in a request coming from the mobile terminal or when a parameter indicating a desire for transmission using a transport channel has been received in a request coming from the mobile terminal.

7. Network node according to Claim 6, **characterized in that** the processing module is furthermore configured so as to trigger the transmission (S3) of said at least one data packet intended for the mobile terminal by way of a data transport channel established between the mobile terminal and the network entity on the basis of the volume of data intended for the mobile terminal.

8. Network node according to Claim 6 or 7, **characterized in that** the processing module is furthermore configured so as to trigger (S2) the establishment of the data transport channel before it is used to transmit (S3) said at least one data packet to the mobile terminal.

9. Network node according to one of Claims 6 to 8, **characterized in that** said network node is a mobility management entity (MME).

10. Network node according to one of Claims 6 to 9, **characterized in that** said network node and said network entity form one and the same entity.

11. System comprising a first network entity and a second network entity, the first network entity being a network node according to one of Claims 6 to 9, wherein the second network entity comprises a processing module able to receive at least one data packet (DL_P(dᵢ)) containing data intended for a mobile terminal (UE) and to transmit said at least one data packet (DL_P(dᵢ)) to the first network entity so that said first network entity either triggers the transmission of said at least one data packet (DL_P(dᵢ)) to the mobile terminal (UE) by way of a data transport channel or inserts the data intended for the mobile terminal into at least one signalling message to be transmitted to the mobile terminal.

12. System according to Claim 11, wherein the second entity is an S-GW network gateway.

13. Mobile terminal (UE) intended to be used with a mobile telecommunications network comprising a network entity able to receive downlink data intended for the mobile terminal, comprising a processing module (COM) able to exchange data with the mobile network,
the processing module being configured so as to insert, into a request intended for a first network node of said mobile telecommunications network, a parameter (IND) indicating a desire to use signalling messages to transmit the downlink data, said parameter being intended to be used by a network node of the mobile telecommunications network to determine whether downlink data intended for the mobile terminal should be transmitted to said mobile terminal in at least one signalling message; and
the mobile terminal (UE) being able to transmit, after transmitting the request into which the parameter (IND) is inserted to said first network node, a service request in response to an alert message (Pgng) transmitted by said first network node following the reception of data intended for the mobile terminal by said network entity of the mobile telecommunications network.

14. Computer program containing code instructions for implementing the data transmission method according to one of Claims 1 to 5 when this program is executed by a processing module of a network node (GW).
